# EUROPÄISCHE PATENTSCHRIFT

(11) **EP 2 520 817 B1**
(45) Veröffentlichungstag und Bekanntmachung des Hinweises auf die Patenterteilung: **23.09.2020**
(21) Anmeldenummer: 12000794.3
(22) Anmeldetag: 08.02.2012
(51) Int. Cl.: F16D 55/225, F16D 66/02

(54) **Verfahren und Vorrichtung zum Überwachen des Bremsbelagverschleißes und Lüftspiels einer Betriebsbremse in Kraftfahrzeugen**
Method and device for monitoring brake lining wear and air clearance of an operating brake in motor vehicles
Procédé et dispositif de surveillance de l'usure de la garniture de frein et du jeu d'air d'un frein de service dans des véhicules automobiles

(30) Priorität: 06.05.2011 DE 102011100726
(43) Veröffentlichungstag der Anmeldung: 07.11.2012
(73) Patentinhaber: MAN Truck & Bus SE, 80995 München (DE)
(72) Erfinder: Wittmann, Thomas, 86368 Gersthofen (DE); Wellner, Stephan, 85221 Dachau (DE)
(74) Vertreter: Liebl, Thomas

(56) Entgegenhaltungen:
- EP-A2- 0 460 376
- DE-A1- 10 211 813
- DE-A1- 19 534 854
- DE-U1- 9 218 248
- US-A- 5 992 579
- US-B2- 7 555 375

## Beschreibung

Die vorliegende Erfindung betrifft ein Verfahren zum Überwachen des Bremsbelagverschleißes und des Lüftspiels einer Betriebsbremse in Kraftfahrzeugen, insbesondere in Nutzfahrzeugen, gemäß dem Oberbegriff des Patentanspruchs 1. Ferner betrifft die Erfindung eine Vorrichtung zum Überwachen des Bremsbelagverschleißes und des Lüftspiels einer Betriebsbremse in Kraftfahrzeugen, insbesondere in Nutzfahrzeugen, gemäß dem Oberbegriff des Patentanspruchs 4.

Ein Verfahren und eine Vorrichtung für eine druckluftbetätigte Betriebsbremse eines Kraftfahrzeuges beschreibt die DE 42 12 407 A1, gemäß der über ein in die Bremsbetätigungskette je Fahrzeugrad eingeschaltetes Drehpotentiometer und eine elektronische Auswerteeinheit zum einen die Bremsbelagstärke (Verschleißanzeige) und zum anderen durch Auswertung der Ausgangssignale eines Drehwinkelsensors einer Nachstelleinrichtung das momentane Lüftspiel ermittelt wird. Konkret wird hierzu durch eine Auswerteeinrichtung, die den Wert des Ausgangssignals des Drehwinkelsensors erfasst, bei jeder Veränderung des Ausgangssignals die Signaldifferenz zum vorherigen Signalwert ermittelt und aus dieser Signaldifferenz das momentane Lüftspiel ermittelt bzw. errechnet. Unter Lüftspiel versteht sich der Abstand der jeweiligen Bremsbeläge zu den zugehörigen Reibpartnern am Fahrzeugrad; das Lüftspiel darf nicht zu groß sein, um die Funktionsfähigkeit der Betriebsbremse (Ansprechverhalten, Bremspedalweg, etc.) nicht zu beeinträchtigen. Bei dem bekannten Verfahren wird die Signaldifferenz ausgehend von einem regulären Lüftspiel von zum Beispiel 0,8 mm fortwährend erfasst und abhängig von der ermittelten Abweichung bzw. Vergrößerung des Lüftspiels ein Warnsignal dann generiert, wenn das Lüftspiel zu groß ist. Dieses Warnsignal soll den Fahrzeugführer veranlassen, mehrmalige Bremsbetätigungen kurz hintereinander auszuführen, um über die in die Betätigungskette der Bremsbetätigung integrierten, automatischen Nachstelleinrichtungen das Lüftspiel wieder zu verkleinern oder aber um auf technische Fehlfunktionen hinzuweisen. Konkret wird hier somit ein Lüftspiel aus einem Sensorsignal eines Drehwinkelsensors errechnet. Diese Vorgehensweise ist jedoch ungeeignet, um eine Fehlfunktion an Bremse und Bremsanlage feststellen zu können. Beispielsweise könnte mit einer derartigen Anordnung kein unbeabsichtigtes Zustellen der Bremse erkannt werden. Folge hiervon wäre ein Heißlaufen der Bremse, das sowohl Bremsenteile als auch zum Teil benachbarte Bauteile zerstört.

Aus der DE 102 11 813 A1 ist ein Verfahren und eine Vorrichtung zur Überprüfung der Funktionssicherheit von Verschleiß- und/oder Funktionsteilen bekannt.

Die EP 0 460 376 A2 beschreibt eine Bremsbetätigungseinrichtung mit einer Einrichtung zum Nachstellen einer Bremse.

Aus der US 7,555,375 B2 ist ein Sensorsystem zur Überwachung des Belagverschleißes einer Scheibenbremse bekannt.

Die US 5,992,579 A zeigt ein Verfahren und eine Einrichtung zur Erkennung einer falsch eingestellten Spielnachstellung für Bremsen.

Aus der DE 92 18 248 U1 ist ein Lüftspieldetektor für eine druckluftbetätigte Scheibenbremse bekannt.

Die DE 195 34 854 A1 zeigt einen Betätigungshebel für eine Bremse.

Aufgabe der Erfindung ist es daher, ein gattungsgemäßes Verfahren zum Überwachen des Bremsbelagverschleißes und des Lüftspiels einer Betriebsbremse in Kraftfahrzeugen, insbesondere in Nutzfahrzeugen, wie beispielsweise Lastkraftwagen und Bussen, nahezu ohne Mehraufwand derart weiterzubilden, dass eine noch verbesserte Überwachung des Lüftspiels erzielt wird. Ferner ist es eine Aufgabe der vorliegenden Erfindung, eine geeignete Vorrichtung zur Durchführung eines derartigen Verfahrens vorzusehen.

Die Lösung dieser Aufgabe gelingt mit den Merkmalen der unabhängigen Patentansprüche. Vorteilhafte Weiterbildungen des Verfahrens sind Gegenstand der Unteransprüche.

Gemäß Anspruch 1 wird ein Verfahren zum Überwachen des Bremsbelagverschleißes und des Lüftspiels einer Betriebsbremse in Kraftfahrzeugen, insbesondere in Nutzfahrzeugen, mit je Radbremse wenigstens einem Wegsensor vorgeschlagen, der in die Betätigungskette der Bremsbetätigung eingeschaltet ist und der mit einer elektronischen Auswerteeinheit verbunden ist, wobei der Wegsensor den Belagverschleiß signalisiert und zugleich mittels der Auswerteeinheit das Lüftspiel dergestalt erfasst wird, dass bei einer mit Bezug zu einem vorgegebenen Soll-Lüftspiel erfassten definierten Vergrößerung des Lüftspiels und damit einem zu großen Lüftspiel eine Warnanzeige aktiviert wird. Erfindungsgemäß sind der Wegsensor und die Auswerteeinheit so ausgelegt, dass durch Auswertung der Signaldifferenz der Wegsensorsignale bei betätigter und nichtbetätigter Betriebsbremse ein aktuelles Lüftspiel als Ist-Lüftspiel erfasst und damit jedwede Abweichung des Lüftspiels vom Soll-Lüftspiel erfassbar ist.

Damit kann sowohl bei einer mit Bezug zu dem vorgegebenen Soll-Lüftspiel erfassten definierten Überschreitung und damit einem zu großen Lüftspiel als auch bei einer mit Bezug zu dem vorgegebenen Soll-Lüftspiel erfassten definierten Unterschreitung und damit einem zu kleinem oder keinem Lüftspiel die Warnanzeige aktiviert werden, zum Beispiel durch Hinterlegung eines Warnsignals in einem elektronischen Bremssystem (EBS). Mit anderen Worten kann mit der erfindungsgemäßen Lösung auch in solchen Fällen von der Auswerteeinheit ein Warnsignal bzw. eine Warnanzeige aktiviert und/oder ausgegeben werden, in denen aufgrund eines zu geringen Lüftspiels eine zu geringe Signaldifferenz oder aufgrund keines Lüftspiels entsprechend keine Signaldifferenz auftritt. Während bei dem aus der DE 42 12 407 A1 bekannten Verfahren signaltechnisch stets von einem regulären Lüftspiel ausgegangen wird, ist es mit der erfindungsgemäßen Verfahrensführung möglich, das gesamte, mögliche Signalspektrum auszuwerten und neben der Gefahr einer mangelhaften Bremswirkung durch ein zu großes Lüftspiel vor allem auch die Gefahr eines Heißlaufens der Bremse aufgrund eines zu kleinen Lüftspiels zu erfassen. Mit der erfindungsgemäßen Lüftspiel-Überwachung kann daher eine Fehlfunktion der Radbremse sowohl durch eine in einem definierten Maße erfolgende Über- als auch durch Unterschreitung eines Soll-Lüftspiels ebenso wie eine Fehlfunktion der Bremsanlage, zum Beispiel hinsichtlich des Restdrucks im Bremszylinder, frühzeitig erkannt werden und somit frühzeitig vor einem Versagen der Bremsanlage gewarnt werden. Da die Sensoreinheiten für die Belagverschleißerkennung regelmäßig bereits serienmäßig vorhanden sind, entsteht kein nennenswerter Bauteilmehraufwand und es ergibt sich eine erhöhte Betriebssicherheit für Bremsanlagen, da die Werte elektronisch erfasst und zum Beispiel auch bereits On-Board ausgewertet werden können. Somit ist eine Lüftspielkontrolle ohne Demontage der Scheibenräder möglich. Das Lüftspiel muss nicht mehr manuell überprüft werden. Das Warnsignal wird also mit einer erfindungsgemäßen Lüftspiel-Überwachung auch dann über die Auswerteeinheit generiert, wenn an der Bremsanlage, zum Beispiel bei einer Fehlfunktion der Verschleißnachstellung, kein oder ein zu geringes Lüftspiel vorliegt, was durch den ständigen Reibkontakt zwischen den Bremsbelägen und dem drehenden Reibpartner (zum Beispiel einer Bremsscheibe) zu einer heißlaufenden Fahrzeugbremse führen könnte.

Erfindungsgemäß wird vorgeschlagen, dass der mit einer Zustelleinrichtung funktionell verbundene Wegsensor die sich ändernde Position der Zustelleinrichtung bei einer Betätigung der Betriebsbremse als einen ersten Signalwert erfasst. Entsprechend erfasst der Wegsensor auch bei nicht betätigter Betriebsbremse und dementsprechend um ein definiertes Lüftspiel von der Bremsscheibe abgehobenen Bremsbelägen einen zweiten Signalwert, so dass anschließend mittels der Auswerteeinheit die Signaldifferenz, insbesondere Spannungsdifferenz, zwischen den ersten und zweiten Signalwerten verglichen werden kann, wobei für den Fall, dass die Signaldifferenz einen in der Auswerteeinheit abgelegten Vergleichs- oder Schwellwert überschreitet ein zu großes Lüftspiel festgestellt wird und für den Fall, dass die Signaldifferenz einen in der Auswerteeinheit abgelegten Vergleichs- oder Schwellwert unterschreitet ein zu kleines Lüftspiel festgestellt wird und dementsprechend von der Auswerteeinheit jeweils ein Warnsignal aktiviert wird. Diese Überwachung kann fortwährend oder auch intervallmäßig zu definierten Zeiten erfolgen.

Erfindungsgemäß generiert die Auswerteeinheit in ihrer Priorität zumindest zwei unterschiedliche Warnsignale, denen unterschiedliche Warnstufen zugeordnet sind. Beispielsweise kann einem ein definiert irreguläres Lüftspiel anzeigenden Warnsignal (optisch und/oder akustisch) eine höhere Priorität zugewiesen werden als einem demgegenüber eine geringere Priorität aufweisenden Warnsignal. Bevorzugt ist hierbei vorgesehen, dass das Warnsignal mit höherer Priorität zu einer schnellstmöglichen Überprüfung der Bremsanlage auffordert und/oder eine Geschwindigkeitsverringerung des Kraftfahrzeuges bewirkt, um einer gegebenenfalls auftretenden Überhitzung der Bremsanlage durch ein zu kleines oder kein Lüftspiel entgegenzuwirken oder bei zu großem Lüftspiel eine Beeinträchtigung der Bremswirkung auszuschließen. Das Warnsignal mit der höheren Priorität kann alternativ aber auch nur dann generiert werden, wenn ein zu geringes Lüftspiel detektiert wird.

Ferner sind erfindungsgemäß bei einer hydraulisch und/oder pneumatisch und/oder elektromechanisch betriebenen Betriebsbremse des Kraftfahrzeuges mit Scheibenbremsen an den Fahrzeugrädern die jeweiligen Wegsensoren als Linearsensoren unmittelbar in die Bremssättel der Scheibenbremsen integriert, die neben der die Bremsbelagstärke definierenden Position auch den Anlegeweg der Bremsbeläge bei jeder oder bei definierten Bremsbetätigungen erfassen. Damit ist eine besonders exakte Erfassung des Lüftspiels erreichbar, indem jegliche Leerspiele, Bauteiltoleranzen, etc. in der Betätigungskette der Betriebsbremse eliminiert sind bzw. unmittelbar der Stellweg der Bremsbeläge bzw. der Belagträger messtechnisch erfasst wird.

Schließlich kann bei einer elektronisch geregelten Betriebsbremse des Kraftfahrzeuges die Auswerteeinheit der Wegsensoren in das elektronische Steuergerät der Betriebsbremse implementiert sein, wodurch zusätzliche Bauteile oder elektrische Leitungen, etc. entfallen können und lediglich eine entsprechende Modifikation des Steuergerätes zu erfolgen hat. Dies schließt gegebenenfalls auch den Vorteil einer leichten Nachrüstbarkeit der verfahrensgemäßen Schritte an bereits vorhandenen Kraftfahrzeugen ein.

Die mit der erfindungsgemäßen Vorrichtung zu erzielenden Vorteile wurden bereits zuvor in Verbindung mit der Verfahrensführung ausführlich erläutert. Insofern wird auf die zuvor gemachten Ausführungen verwiesen. Weiter wird auch ein Kraftfahrzeug, insbesondere ein Nutzfahrzeug, mit einer derartigen Vorrichtung beansprucht, das ebenfalls die zuvor genannten Vorteile aufweist.

Ein Ausführungsbeispiel der Erfindung ist im Folgenden anhand der beiliegenden, grob schematischen Zeichnung näher erläutert, die eine Draufsicht auf einen Bremssattel einer Scheibenbremse einer Betriebsbremse eines Kraftfahrzeuges mit einem integrierten Wegsensor zur Erfassung des Bremsbelagverschleißes und des Lüftspiels zeigt, wobei die Signaldaten in einem nur angedeuteten elektronischen Steuergerät der Betriebsbremse ausgewertet werden.

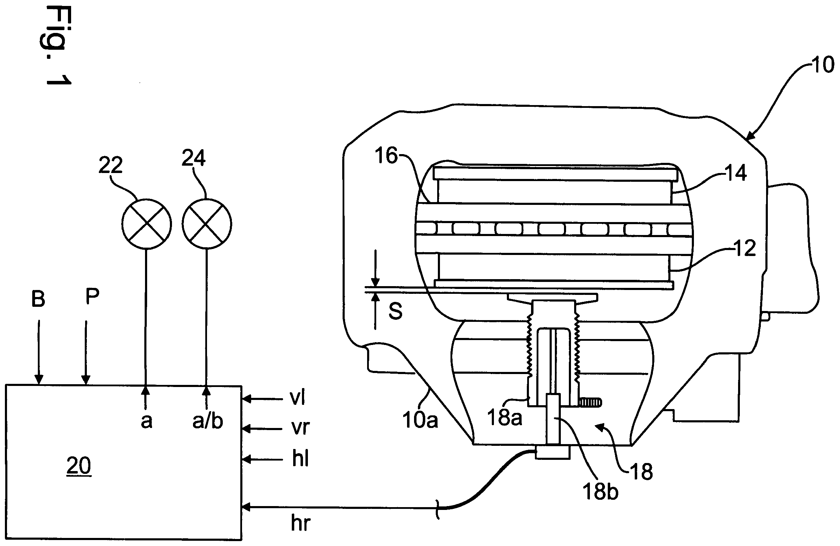

In der Zeichnung ist mit 10 ein Bremssattel bezeichnet, der Teil einer Scheibenbremse eines Fahrzeugrades eines Kraftfahrzeuges bildet und dessen Bremsbeläge mit Belagträgern 12, 14 über eine nicht dargestellte Zustelleinheit der Betriebsbremse des Kraftfahrzeugs an eine Bremsscheibe 16 (nur teilweise eingezeichnet) anpressbar sind. Der Bremssattel 10 kann bekannter Bauart sein und ist nur soweit dargestellt und beschrieben, als dies für das Verständnis der vorliegenden Erfindung erforderlich ist.

In den Bremssattel 10 ist ein linearer Wegsensor 18 integriert, der mit seinem Gehäuse 18a mit der Zustelleinrichtung bzw. einem Hydraulikkolben (nicht ersichtlich) einerseits funktionell verbunden ist und mit seiner Messsonde 18b andererseits an das Gehäuse 10a des Bremssattels 10 angeschlossen ist und der bei betätigter Betriebsbremse die sich ändernde Position der Zustelleinrichtung relativ zum Gehäuse 10a des Bremssattels 10 als einen Signalwert a erfasst.

Bei nicht betätigter Betriebsbremse sind die Bremsbeläge mit den Belagträgern 12, 14 um ein kumuliert eingezeichnetes Lüftspiel s von der Bremsscheibe 16 abgehoben, wobei dann der Wegsensor 18 einen zweiten Signalwert b abgibt, der unterschiedlich zum Signalwert a ist.

Der lineare Wegsensor 18 kann in bekannter Weise als ein Magnetfeldsensor ausgeführt sein, der je nach Eintauchtiefe unterschiedliche Spannungswerte abgibt, die einem nur angedeuteten, elektronischen Steuergerät 20 der Betriebsbremse des Kraftfahrzeuges übermittelt werden.

So können zum Beispiel die Signale vl, vr, hl, hr von vorderen und hinteren, linksseitigen und rechtsseitigen Fahrzeugrädern bzw. deren Bremssättel 10 mit integrierten Wegsensoren 18 im Steuergerät 20 wie nachstehend beschrieben ausgewertet werden.

Dem Steuergerät 20 werden soweit hier relevant ein Bremssignal B und ein Bremsdrucksignal P zur Erfassung des Betriebszustandes der Bremsanlage (Bremszustand oder Lösezustand) zugeführt.

Der Signalwert a der Wegsensoren 18 dient bei betätigter Betriebsbremse zur Erfassung des Verschleißes der Bremsbeläge 12, 14. Liegt der Wert a eines der Bremssättel 10 unterhalb eines definierten Schwell- oder Signalwerts a, so wird über das elektronische Steuergerät 20 ein erstes Warnsignal generiert, das zum Beispiel eine Warnleuchte 22 geringerer Priorität (zum Beispiel gelb leuchtend) aktiviert.

Das Warnsignal kann als Halteschaltung ausgeführt sein und bleibt stets bei Inbetriebnahme des Kraftfahrzeugs gesetzt, bis gegebenenfalls die Bremsbeläge 12, 14 erneuert sind. Die Verschleißanzeige 22 erfolgt in bekannter Weise so frühzeitig, dass keine sofortige Beeinträchtigung in der Funktionsfähigkeit der Betriebsbremse vorliegt und die momentane Einsatzfähigkeit des Kraftfahrzeuges zuverlässig gegeben ist.

Mit dem Lösen der Betriebsbremse des Kraftfahrzeuges stellt sich das Lüftspiel s an den Bremssätteln 10 wieder ein, wobei sich der Signalwert a in den Signalwert b für eine nicht betätigte Betriebsbremse ändert.

Über das Steuergerät 20 wird die Signaldifferenz bzw. Spannungsdifferenz zwischen den Signalwerten a und b verglichen. Übersteigt die Signaldifferenz einen im Steuergerät 20 abgelegten Wert nach oben (Lüftspiel zu groß) oder nach unten (Lüftspiel zu klein oder nicht vorhanden), so generiert das Steuergerät ein zweites Warnsignal zum Beispiel durch Aktivieren einer zweiten (zum Beispiel roten) Warnleuchte 24, die auf eine schnellstmöglich erforderliche Überprüfung der Betriebsbremse und gegebenenfalls auf eine Begrenzung der Fahrgeschwindigkeit des Kraftfahrzeuges hinweist.

Die Warnanzeige 24 ist ebenfalls als Halteschaltung ausgeführt und bleibt bis zur Überprüfung der Betriebsbremse in einer Fachwerkstatt gesetzt und kann dort zum Beispiel über ein Diagnosegerät wieder zurückgesetzt werden. Die Warnanzeige 24 kann als optisches Warnsignal, zum Beispiel blinkend, und/oder kombiniert mit einem akustischen Warnsignal oder anderweitig ausgeführt sein.

Neben den Warnanzeigen 22, 24 können unzulässige Abweichungen der Sollwerte der Signalwerte a und b auch in einem Fehlerspeicher des Steuergerätes 20 abgelegt und über Diagnosegeräte ausgelesen werden.

Die Überwachung des Lüftspiels s der Bremsbeläge 12, 14 an den Bremssätteln 10 durch Vergleich der Signalwerte a und b im Steuergerät 20 kann bei jedem Fahrzeugstart, nach definierten Zeit- oder Bremsintervallen oder ständig erfolgen. Auch eine umgekehrte Verwendung der Signalwerte a und b ist selbstverständlich möglich, zum Beispiel dergestalt, dass mit dem Signalwert b bei nicht betätigter Bremse der Bremsbelagverschleiß erfasst wird, während mit dem Signalwert a bei betätigter Bremse die Signaldifferenz zur Lüftspiel-überwachung gebildet wird.

Wenn in der Betätigung der Betriebsbremse automatisch wirkende Nachstelleinrichtungen verwendet sind, so sind die Wegsensoren 18 im Kraftfluss nach den Nachstelleinrichtungen vorzusehen, um den Bremsbelagverschleiß stets ausgleichen zu können.

## Patentansprüche

1. Verfahren zum Überwachen des Bremsbelagverschleißes und des Lüftspiels einer Betriebsbremse in Kraftfahrzeugen, insbesondere in Nutzfahrzeugen, mit je Radbremse wenigstens einem Wegsensor (18), der in die Betätigungskette der Bremsbetätigung eingeschaltet ist und der mit einer elektronischen Auswerteeinheit verbunden ist, wobei der Wegsensor (18) den Belagverschleiß signalisiert und zugleich mittels der Auswerteeinheit das Lüftspiel erfasst wird, und wobei bei einer mit Bezug zu einem vorgegebenen Soll-Lüftspiel erfassten definierten Vergrößerung des Lüftspiels und damit einem zu großen Lüftspiel eine Warnanzeige aktiviert wird, wobei der Wegsensor (18) und die Auswerteeinheit (20) so ausgelegt sind, dass durch Auswertung der Signaldifferenz der Wegsensorsignale bei betätigter und nichtbetätigter Betriebsbremse ein aktuelles Lüftspiel (s) als Ist-Lüftspiel erfasst und damit jedwede Abweichung des Lüftspiels (s) vom Soll-Lüftspiel erfassbar ist, wobei sowohl bei einer mit Bezug zu dem vorgegebenen Soll-Lüftspiel erfassten definierten Überschreitung und damit einem zu großen Lüftspiel (s) als auch bei einer mit Bezug zu dem vorgegebenen Soll-Lüftspiel erfassten definierten Unterschreitung und damit einem zu kleinem oder keinem Lüftspiel (s) die Warnanzeige aktiviert wird, **dadurch gekennzeichnet, dass** bei Scheibenbremsen (10, 16) als Betriebsbremse des Kraftfahrzeuges die Wegsensoren (18) als Linearsensoren unmittelbar in die Bremssättel (10) integriert sind und neben der die Bremsbelagstärke definierenden Position auch den Anlegeweg der Bremsbeläge (12, 14) bei jeder oder bei definierten Bremsbetätigungen erfassen, dergestalt, dass der Wegsensor (18) mit seinem Gehäuse (18a) mit einer Zustelleinrichtung einerseits, funktionell verbunden ist und mit seiner Messsonde (18b) andererseits an ein Gehäuse (10a) des Bremssattels (10) angeschlossen ist, so dass bei betätigter Betriebsbremse die sich ändernde Position der Zustelleinrichtung relativ zum Gehäuse (10a) des Bremssattels (10) als erster Signalwert (a) erfasst wird, dass der Wegsensor (18) bei nicht betätigter Betriebsbremse und dementsprechend um ein definiertes Lüftspiel (s) von der Bremsscheibe (16) abgehobenen Bremsbelägen einen zweiten Signalwert (b) erfasst,
dass mittels der Auswerteeinheit (20) die Signaldifferenz, insbesondere Spannungsdifferenz, zwischen den ersten und zweiten Signalwerten (a, b) verglichen wird, wobei für den Fall, dass die Signaldifferenz einen in der Auswerteeinheit (20) abgelegten Vergleichs- oder Schwellwert überschreitet ein zu großes Lüftspiel festgestellt wird und für den Fall, dass die Signaldifferenz einen in der Auswerteeinheit (20) abgelegten Vergleichs- oder Schwellwert unterschreitet ein zu kleines Lüftspiel festgestellt wird und dementsprechend von der Auswerteeinheit (20) jeweils ein Warnsignal aktiviert wird, und dass die Auswerteeinheit (20) in ihrer Priorität zumindest zwei unterschiedliche Warnsignale (22, 24) generiert, denen unterschiedliche Warnstufen zugeordnet sind.

2. Verfahren nach Anspruch 1, **dadurch gekennzeichnet, dass** das Warnsignal (24) mit der höheren Priorität nur dann generiert wird, wenn ein zu geringes Lüftspiel (s) detektiert wird.

3. Verfahren nach Anspruch 1 oder 2, **dadurch gekennzeichnet, dass** bei einer elektronisch geregelten Betriebsbremse des Kraftfahrzeuges die Auswerteeinheit der Wegsensoren (18) in das elektronische Steuergerät (20) der Betriebsbremse implementiert ist.

4. Vorrichtung zum Überwachen des Bremsbelagverschleißes und des Lüftspiels einer Betriebsbremse in Kraftfahrzeugen, insbesondere in Nutzfahrzeugen, zur Durchführung eines Verfahrens nach einem der vorhergehenden Verfahrensansprüche, mit je Radbremse wenigstens einem Wegsensor (18), der in die Betätigungskette der Bremsbetätigung eingeschaltet ist und der mit einer elektronischen Auswerteeinheit verbunden ist, wobei der Wegsensor (18) den Belagverschleiß signalisiert und zugleich mittels der Auswerteeinheit das Lüftspiel (s) erfassbar ist, und wobei eine Warnanzeige vorgesehen ist, die bei einer mit Bezug zu einem vorgegebenen Soll-Lüftspiel erfassten definierten Überschreitung des Lüftspiels (s) und damit einem zu großen Lüftspiel aktivierbar ist, wobei der Wegsensor (18) und die Auswerteeinheit (20) so ausgelegt sind, dass durch Auswertung der Signaldifferenz der Wegsensorsignale bei betätigter und nichtbetätigter Betriebsbremse ein aktuelles Lüftspiel (s) als Ist-Lüftspiel erfasst und damit jedwede Abweichung des Lüftspiels (s) vom Soll-Lüftspiel erfassbar ist, wobei sowohl bei einer mit Bezug zu dem vorgegebenen Soll-Lüftspiel erfassten definierten Überschreitung und damit einem zu großem Lüftspiel (s) als auch bei einer mit Bezug zu dem vorgegebenen Soll-Lüftspiel erfassten definierten Unterschreitung und damit einem zu kleinem oder keinem Lüftspiel (s) die Warnanzeige aktiviert wird, **dadurch gekennzeichnet, dass** bei Scheibenbremsen (10, 16) als Betriebsbremse des Kraftfahrzeuges die Wegsensoren (18) als Linearsensoren unmittelbar in die Bremssättel (10) integriert sind und so ausgelegt sind, dass diese neben der die Bremsbelagstärke definierenden Position auch den Anlegeweg der Bremsbeläge (12, 14) bei jeder oder bei definierten Bremsbetätigungen erfassen, dergestalt, dass der Wegsensor (18) mit seinem Gehäuse (18a) mit einer Zustelleinrichtung einerseits funktionell verbunden ist und mit seiner Messsonde (18b) andererseits an ein Gehäuse (10a) des Bremssattels (10) angeschlossen ist, so dass bei betätigter Betriebsbremse die sich ändernde Position der Zustelleinrichtung relativ zum Gehäuse (10a) des Bremssattels (10) als Signalwert (a) erfasst wird, und dass die Auswerteeinheit (20) in ihrer Priorität zumindest zwei unterschiedliche Warnsignale (22, 24) generiert, denen unterschiedliche Warnstufen zugeordnet sind.

5. Vorrichtung nach Anspruch 4, **dadurch gekennzeichnet, dass** bei einer elektronisch geregelten Betriebsbremse des Kraftfahrzeuges die Auswerteeinheit der Wegsensoren (18) in das elektronische Steuergerät (20) der Betriebsbremse implementiert ist.

6. Kraftfahrzeug, insbesondere Nutzfahrzeug, mit einer Vorrichtung zum Überwachen des Bremsbelagverschleißes und des Lüftspiels einer Betriebsbremse nach Anspruch 4 oder 5.

## Claims

1. Method for monitoring the brake lining wear and the clearance of a service brake in motor vehicles, in particular in utility vehicles, having in each case a wheel brake and at least one travel sensor (18) which is integrated into the actuation chain of the brake actuation means and which is connected to an electronic evaluation unit, wherein the travel sensor (18) signals the lining wear and at the same time the clearance is sensed by means of the evaluation unit, and wherein a warning display is activated when there is a defined upward transgression in the clearance, sensed with respect to a predefined setpoint clearance, and therefore there is excessively large clearance, wherein the travel sensor (18) and the evaluation unit (20) are configured in such a way that by evaluating the signal difference between the travel sensor signals when the service brake is actuated and when it is not actuated a current clearance (s) is sensed as an actual clearance, and therefore any deviation of the clearance (s) from the setpoint clearance can be sensed, wherein the warning display is activated both in the event of defined upward transgression which is sensed with respect to the predefined setpoint clearance, and therefore in the event of excessively large clearance (s), as well as in the event of a defined downward transgression which is sensed with respect to the predefined setpoint clearance, and therefore in the event of excessively small clearance (s) or no clearance (s), **characterized in that** when there are disc brakes (10, 16) as a service brake of the motor vehicle the travel sensors (18) are integrated as linear sensors directly into the brake callipers (10), and said travel sensors (18) sense not only the position which defines the brake lining thickness but also the application of the brake linings (12, 14) at every brake activation operation or at defined brake activation operations, in such a way that the travel sensor (18), on the one hand, is functionally connected by its housing (18a) to a brake application device, and, on the other hand, is connected by its measuring probe (18b) to a housing (10a) of the brake calliper (10) in such a way that when the service brake is activated the changing position of the brake application device relative to the housing (10a) of the brake calliper (10) is sensed as a first signal value (a), and that when the service brake is not activated and correspondingly there are brake linings which are lifted off from the brake disc (16) by a defined clearance (s), the travel sensor (18) senses a second signal value (b),
that the signal difference, in particular voltage difference, between the first and second signal values (a, b) is compared by means of the evaluation unit (20), wherein in the event of the signal difference exceeding a comparison value or threshold value which is stored in the evaluation unit (20) an excessively large clearance is detected, and in the event of the signal difference undershooting a comparison value or threshold value which is stored in the evaluation unit (20) an excessively small clearance is detected, and correspondingly in each case a warning signal is activated by the evaluation unit (20), and that the evaluation unit (20) generates, in respect of its priority, at least two different warning signals (22, 24) which are assigned different warning levels.

2. Method according to Claim 1, **characterized in that** the warning signal (24) with the higher priority is generated only when an excessively small clearance (s) is detected.

3. Method according to Claim 1 or 2, **characterized in that** when there is an electronically controlled service brake of the motor vehicle the evaluation unit of the travel sensors (18) is implemented in the electronic control unit (20) of the service brake.

4. Device for monitoring the brake lining wear and the clearance of a service brake in motor vehicles, in particular in utility vehicles, for carrying out a method according to one of the preceding method claims, having in each case a wheel brake and at least one travel sensor (18) which is integrated into the actuation chain of the brake actuation means and which is connected to an electronic evaluation unit, wherein the travel sensor (18) signals the lining wear and at the same time the clearance (s) can be sensed by means of the evaluation unit, and wherein a warning display is provided which can be activated in the event of defined upward transgression of the clearance (s) which is sensed in respect of a predefined setpoint clearance, and therefore excessively large clearance, wherein the travel sensor (18) and the evaluation unit (20) are configured in such a way that by evaluating the signal difference between the travel sensor signals when the service brake is actuated and when the service brake is not actuated, current clearance (s) is sensed as actual clearance and therefore any deviation of the clearance (s) from the setpoint clearance can be sensed, wherein the warning display is activated both in the event of defined upward transgression which is sensed with respect to the predefined setpoint clearance, and therefore in the event of excessively large clearance (s), as well as in the event of a defined downward transgression which is sensed with respect to the predefined setpoint clearance, and therefore in the event of excessively small clearance (s) or no clearance (s), **characterized in that** when there are disc brakes (10, 16) as the service brake of the motor vehicle, the travel sensors (18) are integrated as linear sensors directly into the brake callipers (10) and are configured in such a way that they sense not only the position which defines the brake lining thickness but also the application travel of the brake lining (12, 14) at each brake activation operation or at defined brake operations, in such a way that the travel sensor (18) is functionally connected by its housing (18a) to a brake application device on the one hand and is connected by its measuring probe (18b) to a housing (10a) of the brake calliper (10), on the other hand, so that when the service brake is actuated the changing position of the brake application device relative to the housing (10a) of the brake calliper (10) is sensed as a signal value (a), and **in that** the evaluation unit (20) generates, in terms of its priority, at least two different warning signals (22, 24) which are assigned different warning levels.

5. Device according to Claim 4, **characterized in that** when there is an electronically controlled service brake of the motor vehicle, the evaluation unit of the travel sensors (18) is implemented in the electronic control unit (20) of the service brake.

6. Motor vehicle, in particular utility vehicle, having a device for monitoring the brake lining wear and the clearance of a service brake according to Claim 4 or 5.

## Revendications

1. Procédé de surveillance de l'usure de la garniture de frein et du jeu de desserrage d'un frein de service dans des véhicules automobiles, en particulier dans des véhicules utilitaires, comprenant pour chaque frein de roue au moins un capteur de course (18) qui est inséré dans la chaîne d'actionnement de l'actionnement du frein et qui est relié à une unité d'évaluation électronique, dans lequel le capteur de course (18) signale l'usure de la garniture, et en même temps, le jeu de desserrage est détecté au moyen de l'unité d'évaluation, et dans lequel un affichage d'avertissement est activé dans le cas d'une augmentation définie détectée du jeu de desserrage par rapport à un jeu de desserrage de consigne prédéfini et donc un jeu de desserrage trop important, dans lequel le capteur de course (18) et l'unité d'évaluation (20) sont conçus de telle sorte que l'évaluation de la différence de signal des signaux de capteur de course détecte un jeu de desserrage actuel (s) comme le jeu de desserrage réel lorsque le frein de service est actionné et n'est pas actionné et permet ainsi de détecter tout écart du jeu de desserrage (s) par rapport au jeu de desserrage de consigne, dans lequel le signal d'avertissement est activé aussi bien dans le cas d'un dépassement défini détecté par rapport au jeu de desserrage de consigne prédéfini, et donc d'un jeu de desserrage (s) trop important, que dans le cas d'un soupassement défini détecté par rapport au jeu de desserrage de consigne, et donc d'un jeu de desserrage (s) trop faible ou inexistant, **caractérisé en ce que** pour des freins à disque (10, 16) comme frein de service du véhicule automobile, les capteurs de course (18) sont intégrés directement dans les étriers de frein (10) sous forme de capteurs linéaires et détectent en plus de la position définissant l'épaisseur de garniture de frein aussi la course d'application des garnitures de frein (12, 14) à chaque actionnement ou à des actionnements de frein définis, de telle sorte que le capteur de course (18) est relié fonctionnellement d'une part par son boîtier (18a) à un dispositif d'approche et est relié d'autre part par sa sonde de mesure (18b) à un boîtier (10a) de l'étrier de frein (10) de sorte que lorsque le frein de service est actionné, la position variable du dispositif d'approche par rapport au boîtier (10a) de l'étrier de frein (10) est détectée comme la première valeur de signal (a), de sorte que le capteur de course (18) détecte une deuxième valeur de signal (b) lorsque le frein de service n'est pas actionné et les garnitures de frein sont en conséquence écartées du disque de frein (16) d'un jeu de desserrage (s) défini,
**en ce que** l'unité d'évaluation (20) permet de comparer la différence de signal, en particulier la différence de tension, entre les première et deuxième valeurs de signal (a, b), dans lequel un jeu de desserrage trop important est constaté dans le cas où la différence de signal dépasse une valeur de comparaison ou de seuil enregistrée dans l'unité d'évaluation (20), et un jeu de desserrage trop faible est constaté dans le cas où la différence de signal soupasse une valeur de comparaison ou de seuil enregistrée dans l'unité d'évaluation (20), et par conséquent, l'unité d'évaluation (20) active respectivement un signal d'avertissement, et l'unité d'évaluation (20) produit au moins deux signaux d'avertissement (22, 24) de priorité différente auxquels différents niveaux d'avertissement sont associés.

2. Procédé selon la revendication 1, **caractérisé en ce qu'**un signal d'avertissement (24) de la priorité supérieure n'est généré que si un jeu de desserrage (s) trop faible est détecté.

3. Procédé selon la revendication 1 ou 2, **caractérisé en ce que** pour un frein de service à régulation électronique du véhicule automobile, l'unité d'évaluation des capteurs de course (18) est mise en oeuvre dans l'appareil de commande électronique (20) du frein de service.

4. Dispositif de surveillance de l'usure de la garniture de frein et du jeu de desserrage d'un frein de service dans des véhicules automobiles, en particulier dans des véhicules utilitaires, destiné à exécuter un procédé selon l'une quelconque des revendications précédentes, comprenant pour chaque frein de roue au moins un capteur de course (18) qui est inséré dans la chaîne d'actionnement de l'actionnement du frein et qui est relié à une unité d'évaluation électronique, dans lequel le capteur de course (18) signale l'usure de la garniture, et en même temps, le jeu de desserrage (s) peut être détecté au moyen de l'unité d'évaluation, et dans lequel un affichage d'avertissement est prévu qui peut être activé dans le cas d'une augmentation définie détectée du jeu de desserrage (s) par rapport à un jeu de desserrage de consigne prédéfini et donc un jeu de desserrage trop important, dans lequel le capteur de course (18) et l'unité d'évaluation (20) sont conçus de telle sorte que l'évaluation de la différence de signal des signaux de capteur de course détecte un jeu de desserrage actuel (s) comme le jeu de desserrage réel lorsque le frein de service est actionné et n'est pas actionné et permet ainsi de détecter tout écart du jeu de desserrage (s) par rapport au jeu de desserrage de consigne, dans lequel l'affichage d'avertissement est activé aussi bien dans le cas d'un dépassement défini détecté par rapport au jeu de desserrage de consigne prédéfini, et donc d'un jeu de desserrage (s) trop important, que dans le cas d'un soupassement défini détecté par rapport au jeu de desserrage de consigne, et donc d'un jeu de desserrage (s) trop faible ou inexistant, **caractérisé en ce que** pour des freins à disque (10, 16) comme frein de service du véhicule automobile, les capteurs de course (18) sont intégrés directement dans les étriers de frein (10) sous forme de capteurs linéaires et sont conçus de telle sorte qu'ils détectent en plus de la position définissant l'épaisseur de garniture de frein aussi la course d'application des garnitures de frein (12, 14) à chaque actionnement ou à des actionnements de frein définis, de telle sorte que le capteur de course (18) est relié fonctionnellement d'une part par son boîtier (18a) à un dispositif d'approche et est relié d'autre part par sa sonde de mesure (18b) à un boîtier (10a) de l'étrier de frein (10) de sorte que lorsque le frein de service est actionné, la position variable du dispositif d'approche par rapport au boîtier (10a) de l'étrier de frein (10) est détectée comme la première valeur de signal (a), et **en ce que** l'unité d'évaluation (20) produit en priorité au moins deux signaux d'avertissement (22, 24) différents auxquels différents niveaux d'avertissement sont associés.

5. Dispositif selon la revendication 4, **caractérisé en ce que** pour un frein de service à régulation électronique du véhicule automobile, l'unité d'évaluation des capteurs de course (18) est mise en oeuvre dans l'appareil de commande électronique (20) du frein de service.

6. Véhicule automobile, en particulier véhicule utilitaire, comprenant un dispositif de surveillance de l'usure de la garniture de frein et du jeu de desserrage d'un frein de service selon la revendication 4 ou 5.
